(19) Europäisches Patentamt
European Patent Office
Office européen des brevets

(11) **EP 2 859 212 B1**

(12) **FASCICULE DE BREVET EUROPEEN**

(45) Date de publication et mention de la délivrance du brevet:
**07.09.2016 Bulletin 2016/36**

(21) Numéro de dépôt: **13728473.3**

(22) Date de dépôt: **23.05.2013**

(51) Int Cl.:
*F02D 13/02* *(2006.01)*   *F02D 23/00* *(2006.01)*

(86) Numéro de dépôt international:
**PCT/FR2013/051129**

(87) Numéro de publication internationale:
**WO 2013/182775 (12.12.2013 Gazette 2013/50)**

(54) **DISPOSITIF DE LIMITATION DE TENEUR EN OXYGENE DANS LES GAZ D'ECHAPPEMENT D'UN MOTEUR A COMBUSTION DE VEHICULE AUTOMOBILE**

VORRICHTUNG ZUR BEGRENZUNG DES SAUERSTOFFGEHALTS IN DEN ABGASEN EINES KRAFTFAHRZEUG-VERBRENNUNGSMOTORS

DEVICE FOR LIMITING THE OXYGEN CONTENT IN THE EXHAUST GASES OF A MOTOR VEHICLE COMBUSTION ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.06.2012 FR 1255297**

(43) Date de publication de la demande:
**15.04.2015 Bulletin 2015/16**

(73) Titulaire: **Peugeot Citroën Automobiles SA 78140 Vélizy Villacoublay (FR)**

(72) Inventeurs:
- **ALLEGRE, Guillaume F-25250 Soye (FR)**
- **GROLLEAU, Matthieu F-77000 Melun (FR)**
- **WATTIGNIES, Rudy F-28130 Maintenon (FR)**

(56) Documents cités:
WO-A1-2010/007512   DE-A1-102006 031 254
FR-A1- 2 850 706   FR-A1- 2 953 887

**Description**

L'invention se situe dans le domaine du pilotage de moteur de véhicule automobile et notamment les stratégies de contrôle-commande d'un moteur à allumage commandé pour la protection du catalyseur contre le vieillissement.

Les moteurs à essence suralimentés à injection directe génèrent un phénomène important de balayage - en anglais « scavenging »- des gaz frais de l'admission vers l'échappement au moment où les soupapes admission et échappement sont simultanément ouvertes, c'est-à-dire notamment en fin de phase d'échappement et en début de phase d'admission. Ce balayage est profitable au fonctionnement du moteur, par exemple en termes d'accroche turbo, de réduction de cliquetis et de réduction de grondement ou « rumble » selon la terminologie anglophone. Cependant celui-ci entraine un taux important d'oxygène dans les gaz échappement.

L'association de cette importante concentration d'oxygène et d'une température catalyseur élevée sur des points de fonctionnement chargés du moteur entraîne une accélération du vieillissement du catalyseur, comme décrit dans DE 10 2006 031 254 A1. En particulier, à haute température, l'oxygène des gaz d'échappement engendre un phénomène d'oxydation de métaux précieux du catalyseur.

Le but de l'invention est de proposer une stratégie de contrôle d'un moteur de véhicule automobile laquelle préserve le catalyseur d'un vieillissement dû à un taux d'oxygène trop élevé dans les gaz d'échappement à des températures élevées.

Ce but est atteint selon l'invention grâce à un dispositif de contrôle d'ouverture et de fermeture de soupapes d'admission et d'échappement de moteur à combustion de véhicule automobile, caractérisé en ce qu'il comprend un module configuré pour déterminer une concentration volumique d'oxygène maximale admissible en entrée d'un catalyseur de pot d'échappement, un module configuré pour déterminer une concentration volumique d'oxygène dans des gaz issus d'une combustion dans le moteur, un module configuré pour déterminer un débit massique maximal admissible de balayage en air en fonction de la concentration volumique maximale admissible d'oxygène dans des gaz d'échappement et de la concentration volumique d'oxygène dans des gaz issus de la combustion, et un module configuré pour mettre en oeuvre un contrôle de l'ouverture et de la fermeture des soupapes d'admission et d'échappement du moteur en fonction de la consigne de balayage maximale admissible en air ainsi déterminée.

Avantageusement, le dispositif est configuré pour déterminer la concentration volumique d'oxygène maximale admissible en entrée du catalyseur de pot d'échappement en tenant compte d'une température du catalyseur et en tenant compte d'une consigne de richesse de mélange de combustion dans le moteur.

Avantageusement, le module configuré pour déterminer une concentration volumique d'oxygène dans les gaz issus de la combustion effectue cette détermination en utilisant une cartographie donnant une concentration volumique en oxygène en fonction d'une valeur de régime moteur et d'une valeur de remplissage en air du moteur pondérée par une table dont une entrée est une valeur de consigne de richesse de combustion.

Avantageusement, le module configuré pour déterminer le débit massique maximal admissible de balayage en air résout une équation du second degré ayant pour inconnue une valeur de débit massique maximal admissible de balayage en air.

Avantageusement, le module configuré pour déterminer le débit massique maximal admissible de balayage en air identifie des coefficients de la dite équation du second degré à partir de valeurs de masse molaire de gaz issus de la combustion, d'une concentration volumique d'oxygène dans les gaz issus de la combustion et d'une concentration volumique maximale en oxygène de gaz d'échappement.

Avantageusement, l'équation du second degré est de la forme :

$$\dot{m}_{scv}^{\ 2} \times \left[M_{cmb} \times \left(\tau_{VO2_{scv}} - \tau_{VO2_{ech}}\right)\right]$$

$$+ \dot{m}_{scv} \times \left[\dot{m}_{cmb} \times \left(\tau_{VO2_{cmb}} \times \left(M_{scv} - M_{cmb}\right) + \left(\tau_{VO2_{cmb}} + \tau_{VO2_{scv}} - \tau_{VO2_{ech}}\right) \times M_{cmb} - \tau_{VO2_{ech}} \times M_{scv}\right)\right]$$

$$+ \dot{m}_{cmb}^{\ 2} \times \left[M_{scv} \times \left(\tau_{VO2_{cmb}} - \tau_{VO2_{ech}}\right)\right] = 0$$

Où : $\dot{m}_{scv}$ est un débit massique de gaz balayés, $M_{cmb}$ est une masse molaire des gaz issus de la combustion, $\tau_{VO2_{scv}}$ est une concentration volumique d'oxygène dans les gaz balayés, $\tau_{VO2_{ech}}$ est une concentration volumique maximale admissible d'oxygène dans les gaz d'échappement, $\tau_{VO2_{cmb}}$ est une concentration volumique d'oxygène dans les gaz issus de la combustion, $M_{scv}$ est une masse molaire des gaz balayés, $\dot{m}_{cmb}$ est un débit massique des gaz issus de la combustion.

Avantageusement, la valeur de la masse molaire des gaz balayés est choisie égale à la masse molaire de l'air.

Avantageusement, le dispositif comprend un module d'actionnement des soupapes et le dispositif applique aux soupapes des déphasages d'ouverture et/ou de fermeture de manière à ce que la consigne de balayage maximale admissible soit mise en oeuvre dans le moteur.

D'autres caractéristiques, buts et avantages de l'invention apparaitront à la lecture de la description qui va suivre, faite en référence aux figures annexées sur lesquelles :

La figure 1 est un diagramme fonctionnel représentant un dispositif de commande d'ouverture et de fermeture de soupapes selon un mode de réalisation préféré de l'invention ;

La figure 2 représente schématiquement une relation de débit entre des gaz d'échappement, des gaz issus de la combustion et des gaz de balayage.

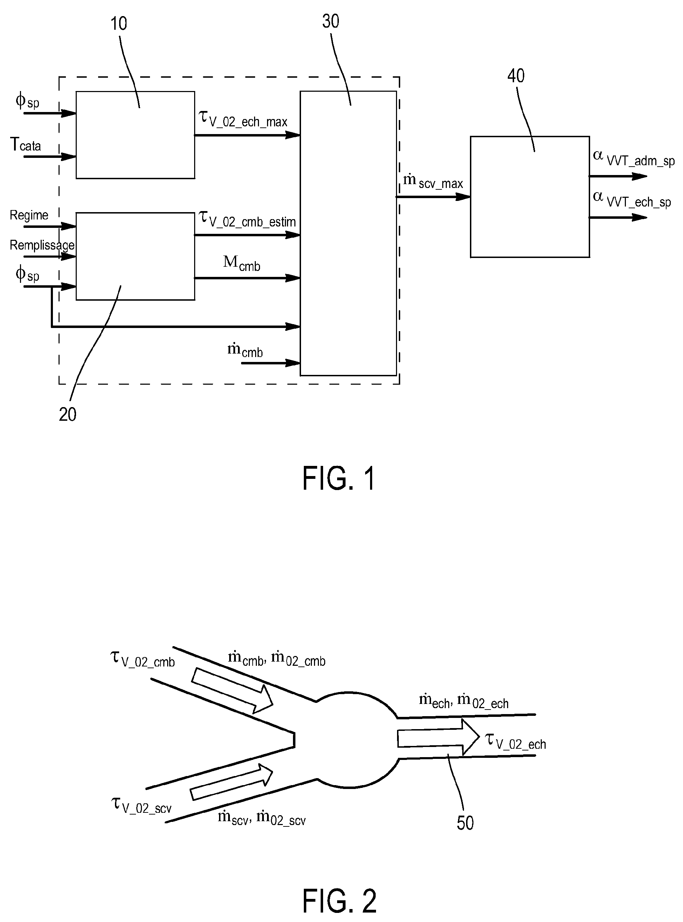

On décrira maintenant un dispositif de commande d'ouverture et de fermeture de soupapes de moteur à combustion selon un mode de réalisation préféré de l'invention. Tel que représenté sur la figure 1, un tel dispositif comprend trois modules logiques 10, 20 et 30 lesquels seront décrits maintenant.

Le vieillissement d'un catalyseur de post-traitement de gaz d'échappement est accéléré à forte température et en présence d'oxygène. Il est donc nécessaire de limiter la présence d'oxygène dans les gaz entrants dans le catalyseur quand celui-ci est très chaud. La richesse des gaz à l'échappement, et donc la richesse de combustion, a aussi une influence sur le vieillissement du catalyseur.

Un premier module logique 10 reçoit en entrée une consigne de richesse de combustion $\phi_{sp}$ et une température $T_{cata}$ d'un catalyseur trois voies disposé sur une ligne d'échappement d'un véhicule automobile.

Ce premier module 10 délivre une concentration volumique d'oxygène maximale admissible dans les gaz d'échappement en entrée du catalyseur $\tau_{VO2ech\_max}$ afin de protéger le catalyseur du vieillissement.

Pour cela, cette concentration maximale d'oxygène est donc définie comme une fonction de la température du catalyseur de post-traitement des gaz échappement et de la richesse de combustion.

Le contrôleur moteur délivre donc une telle valeur de concentration maximale d'oxygène.

Un second module logique 20 reçoit en entrée une valeur de régime moteur notée ici « Regime », une valeur de remplissage en air du moteur, aussi appelée charge en air, notée ici « Remplissage », et la consigne de richesse de combustion $\phi_{sp}$.

A partir de ces valeurs, ce deuxième module 20 détermine une valeur $\tau_{VO2cmb\_estim}$ de concentration volumique d'oxygène des gaz produits par la combustion et une valeur $M_{cmb}$ de masse molaire des gaz issus de la combustion.

L'estimation de la concentration volumique d'oxygène des gaz produits par la combustion ainsi que de la masse molaire des gaz de combustion par le module 20 se fait de la façon suivante.

La concentration volumique dans les gaz issus de la combustion est estimée par une cartographie fonction du régime moteur et du remplissage en air pondérée par une table fonction de la consigne de richesse de combustion.

La masse molaire des gaz issus de la combustion est définie comme une fonction de la richesse des gaz de combustion.

Le troisième module 30 reçoit en entrée la valeur $\tau_{VO2ech\_max}$, la valeur $\tau_{VO2cmb\_estim}$, et la valeur $M_{cmb}$.

Il reçoit en outre une valeur $\dot{m}_{cmb}$ de débit massique des gaz de combustion c'est-à-dire des gaz initialement enfermés dans la chambre de combustion. Le débit des gaz de combustion $\dot{m}_{cmb}$ est estimé par le contrôle moteur. A partir de ces valeurs, ce troisième module fonctionnel détermine une valeur $\dot{m}_{scv\_max}$ de débit massique maximal admissible de balayage en air afin de satisfaire la concentration volumique d'oxygène maximale admissible dans les gaz d'échappement.

Un module 40 de détermination de consignes de positions de déphaseurs d'arbre à came à l'admission et à l'échappement détermine alors une valeur $\alpha_{VVT\_adm\_sp}$ de consigne de déphasage du déphaseur à l'admission et une valeur $\alpha_{VVT\_ech\_sp}$ de consigne de déphasage du déphaseur à l'échappement.

Ainsi, la détermination de la limitation du débit massique maximal admissible de balayage en air se fait ici en trois étapes, qui sont respectivement une détermination de la concentration volumique d'oxygène maximale permettant de limiter le vieillissement du catalyseur, une estimation de la concentration volumique d'oxygène des gaz produits par la combustion et un calcul du débit massique maximal admissible de balayage en air permettant de respecter la concentration volumique d'oxygène maximale admissible dans les gaz d'échappement.

Le calcul du débit massique maximal admissible de balayage en air permettant de respecter la concentration volumique d'oxygène maximale admissible dans les gaz d'échappement se fait ici de la façon suivante.

Le module fonctionnel 30 détermine un débit massique maximal admissible de balayage en air en fonction d'un taux volumique maximal admissible d'oxygène dans les gaz d'échappement et du taux volumique d'oxygène dans les gaz issus de la combustion.

Cette détermination s'appuie sur le fait que les gaz d'échappement sont, tel que représenté sur la figure 2, un mélange dans un collecteur d'échappement 50 des gaz de combustion et des gaz de balayage. Sur la figure 2, $\tau_{VO2cmb}$ est une valeur de concentration volumique d'oxygène dans les gaz issus de la combustion, $\tau_{VO2scv}$ est une valeur de concentration volumique d'oxygène dans les gaz balayés, $\tau_{VO2ech}$ est une valeur de concentration volumique d'oxygène dans les gaz d'échappement, $\dot{m}_{cmb}$ est une valeur de débit massique des gaz issus de la combustion, $\dot{m}_{scv}$ est une valeur de débit massique de gaz balayés, $\dot{m}_{ech}$ est une valeur de débit massique de gaz dans la ligne d'échappement, $\dot{m}_{O2cmb}$ est une valeur de débit massique d'oxygène dans les gaz issus de la combustion, $\dot{m}_{O2scv}$ est une valeur de débit massique d'oxygène dans les gaz balayés, $\dot{m}_{O2_{ech}}$ est une valeur de débit massique d'oxygène dans les gaz d'échappement.

Pour déterminer le débit de balayage $\dot{m}_{scv}$ permettant de respecter une concentration volumique d'oxygène $\tau_{O2_{ech}}$ dans les gaz d'échappement, deux bilans massiques sont réalisés :

Bilan massique de gaz :

$$\dot{m}_{cmb} + \dot{m}_{scv} = \dot{m}_{ech} \qquad (E1)$$

Bilan massique d'oxygène :

$$\dot{m}_{O2_{cmb}} + \dot{m}_{O2_{scv}} = \dot{m}_{O2_{ech}} \qquad (E2)$$

De plus en prenant en compte les concentrations massiques d'oxygène dans ces débits on peut écrire cette dernière équation autrement :

$$\dot{m}_{cmb} \times \tau_{M\_O2\_cmb} + \dot{m}_{scv} \times \tau_{M\_O2\_scv} = \dot{m}_{ech} \times \tau_{M\_O2\_ech} \qquad (E2')$$

Avec :

$\tau_{M\_O2\_cmb}$ : concentration massique d'oxygène dans les gaz issus de la combustion
$\tau_{M\_O2\_scv}$ : concentration massique d'oxygène dans les gaz balayés
$\tau_{M-O2\_ech}$ : concentration massique d'oxygène dans les gaz d'échappement

En prenant en compte le lien entre concentration massique et concentration volumique :

$$\tau_{M\_O2\_scv} = \tau_{VO2_{scv}} \times \frac{M_{O2}}{M_{scv}} \qquad (E3)$$

On obtient :

$$\dot{m}_{cmb} \times \tau_{VO2_{cmb}} \times \frac{M_{O2}}{M_{cmb}} + \dot{m}_{scv} \times \tau_{VO2_{scv}} \times \frac{M_{O2}}{M_{scv}} = \dot{m}_{ech} \times \tau_{VO2_{ech}} \times \frac{M_{O2}}{M_{ech}} \quad (E2'')$$

Avec :

$M_{O2}$ : Masse molaire de l'oxygène
$M_{cmb}$ : Masse molaire des gaz issus de la combustion
$M_{scv}$ : Masse molaire des gaz balayés
$M_{ech}$ : Masse molaire des gaz d'échappement

On détermine la masse molaire des gaz échappement à partir des trois équations suivantes :

$$\frac{\dot{m}_{scv}}{\dot{m}_{ech}} = \frac{n_{scv} \times M_{scv}}{n_{ech} \times M_{ech}} \qquad (E4)$$

$$\dot{m}_{cmb} + \dot{m}_{scv} = \dot{m}_{ech} \qquad (E1)$$

$$M_{ech} = x \times M_{scv} + (1-x) \times M_{cmb} \quad \text{avec } x = \frac{n_{scv}}{n_{ech}} \qquad (E5)$$

Avec :

$n_{scv}$ : nombre de mol de gaz balayé dans un laps de temps t

$n_{ech}$ : nombre de mol de gaz d'échappement dans un laps de temps t

Les inconnues sont $m_{ech}$, x, et $M_{ech}$. Par résolution, on obtient :

$$x = \frac{M_{cmb} \times \dot{m}_{scv}}{M_{scv} \times \dot{m}_{cmb} + M_{cmb} \times \dot{m}_{scv}} \qquad (E6)$$

$$M_{ech} = \frac{M_{cmb} \times \dot{m}_{scv}}{M_{scv} \times \dot{m}_{cmb} + M_{cmb} \times \dot{m}_{scv}} \times (M_{scv} - M_{cmb}) + M_{cmb} \qquad (E7)$$

Par simplification de l'équation (E2") avec (E1) et (E7) il vient :

$$\dot{m}_{scv}^{\,2} \times \left[ M_{cmb} \times \left( \tau_{VO2_{scv}} - \tau_{VO2_{ech}} \right) \right]$$
$$+ \dot{m}_{scv} \times \left[ \dot{m}_{cmb} \times \left( \tau_{VO2_{cmb}} \times (M_{scv} - M_{cmb}) + \left( \tau_{VO2_{cmb}} + \tau_{VO2_{scv}} - \tau_{VO2_{ech}} \right) \times M_{cmb} - \tau_{VO2_{ech}} \times M_{scv} \right) \right]$$
$$+ \dot{m}_{cmb}^{\,2} \times \left[ M_{scv} \times \left( \tau_{VO2_{cmb}} - \tau_{VO2_{ech}} \right) \right] = 0$$

Cette équation est de la forme :

$$a \times x^2 + b \times x + c = 0$$

Dont les solutions sont :

$$x_1 = \frac{-b + \sqrt{\Delta}}{2a} \text{ et } x_2 = \frac{-b - \sqrt{\Delta}}{2a}$$

Avec :

$$\Delta = b^2 - 4 \times a \times c$$

Seule la solution $x_1$ est plausible car elle conduit à un débit positif.

On obtient un certain nombre de constantes et données du problème de la façon suivante. D'abord, on assimile le débit d'air balayé à de l'air :

$$\tau_{VO2_{scv}} = 21\%$$

$$M_{scv} = 29 \text{ g/mol}$$

Le débit des gaz de combustion $\dot{m}_{cmb}$ est quant à lui estimé par le contrôle moteur. La concentration volumique d'oxygène dans les gaz d'échappement $\tau_{VO2_{ech}}$ est la consigne précédemment déterminée. La masse molaire des gaz de combustion $M_{cmb}$ et la concentration volumique d'oxygène dans les gaz issus de la combustion $\tau_{VO2_{cmb}}$ sont définies tel que décrit plus haut.

Dans le présent mode de réalisation, la détermination des paramètres a, b c et la résolution de cette équation de second degré sont réalisées dans le logiciel de contrôle commande du moteur du véhicule.

Cette consigne de débit massique de gaz de balayage, une fois définie, est transformée en consigne de position des déphaseurs d'arbre à came. De tels déphaseurs sont également appelés ici « Vanos ». Ainsi, lorsque les soupapes d'admission sont entrainées par un premier arbre à cames et les soupapes d'échappement par un deuxième arbre à cames, un déphasage de rotation respectif est appliqué aux arbres à cames d'admission et d'échappement de telle sorte que la consigne de balayage est implémentée dans le dispositif.

En variante, les soupapes sont actionnées par des actionneurs électromagnétiques ou pneumatiques et des déphasages sont appliqués à ces actionneurs de telle sorte que la consigne de balayage soit mise en oeuvre dans le moteur.

En variante au mode de réalisation décrit ci-dessus, un mode de réalisation consiste à mettre en oeuvre une définition différente de la limite de taux d'oxygène admissible par exemple en dépendance d'autres paramètres que la richesse ou la température du catalyseur.

Un autre mode de réalisation consiste à adopter une définition différente de la concentration en oxygène des gaz issus de la combustion par exemple par une dépendance à d'autres paramètres que ceux définis ci-dessus. Bien sûr, une autre méthode de résolution de l'équation du second ordre peut également être mise en oeuvre.

L'invention permet à la fois de garder un important taux de balayage dans la plupart des situations de vie du véhicule, notamment lorsque le catalyseur placé dans la ligne échappement n'est pas trop chaud, ce qui permet d'améliorer la performance du véhicule. L'invention permet en outre de protéger le catalyseur d'un vieillissement prématuré par oxydation quand celui est très chaud.

Ainsi la nécessité de compromis performance / durabilité du véhicule est soulagée quand la température du catalyseur le permet.

## Revendications

1. Dispositif de contrôle d'ouverture et de fermeture de soupapes d'admission et d'échappement de moteur à combustion de véhicule automobile, **caractérisé en ce qu'**il comprend un module (10) configuré pour déterminer une concentration volumique d'oxygène maximale admissible ($\tau_{VO2ech}$) en entrée d'un catalyseur de pot d'échappement, un module (20) configuré pour déterminer une concentration volumique d'oxygène dans des gaz issus d'une combustion dans le moteur ($\tau_{VO2cmb\_estim}$), un module (30) configuré pour déterminer un débit massique maximal admissible de balayage en air ($\dot{m}_{scv\_max}$) en fonction de la concentration volumique maximale admissible d'oxygène dans des gaz d'échappement ($\tau_{VO2ech}$) et de la concentration volumique d'oxygène dans des gaz issus de la combustion ($\tau_{VO2cmb\_estim}$) et un module (40) configuré pour mettre en oeuvre un contrôle de l'ouverture et de la fermeture des soupapes d'admission et d'échappement du moteur en fonction de la consigne de balayage maximale admissible en air ainsi déterminée.

2. Dispositif selon la revendication précédente, **caractérisé en ce qu'**il est configuré pour déterminer (10) la concentration volumique d'oxygène maximale admissible ($\tau_{VO2ech}$) en entrée du catalyseur de pot d'échappement en tenant compte d'une température du catalyseur ($T_{cata}$) et en tenant compte d'une consigne de richesse ($\phi_{sp}$) de mélange de combustion dans le moteur.

3. Dispositif selon l'une quelconque des revendications précédentes, **caractérisé en ce que** le module (20) configuré pour déterminer une concentration volumique d'oxygène dans les gaz issus de la combustion ($\tau_{VO2cmb\_estim}$) effectue cette détermination en utilisant une cartographie donnant une concentration volumique en oxygène en fonction d'une valeur de régime moteur et d'une valeur de remplissage en air du moteur pondérée par une table dont une entrée est une valeur de consigne de richesse de combustion ($\phi_{sp}$). ).

4. Dispositif selon l'une quelconque des revendications précédentes, **caractérisé en ce que** le module (30) configuré pour déterminer le débit massique maximal admissible de balayage en air ($\dot{m}_{scv\_max}$) résout une équation du second degré ayant pour inconnue une valeur de débit massique maximal admissible de balayage en air ($\dot{m}_{scv\_max}$).

5. Dispositif selon la revendication précédente, **caractérisé en ce que** le module (30) configuré pour déterminer le débit massique maximal admissible de balayage en air ($\dot{m}_{scvmax}$) identifie des coefficients de la dite équation du second degré à partir de valeurs de masse molaire de gaz issus de la combustion ($M_{cmb}$), d'une concentration volumique d'oxygène dans les gaz issus de la combustion ($\tau_{VO2cmb}$) et d'une concentration volumique maximale en oxygène de gaz d'échappement ($\tau_{VO2ech}$).

6. Dispositif selon la revendication précédente, **caractérisé en ce que** l'équation du second degré est de la forme :

$$\dot{m}_{scv}{}^2 \times \left[ M_{cmb} \times \left( \tau_{VO2_{scv}} - \tau_{VO2_{ech}} \right) \right]$$

$$+ \dot{m}_{scv} \times \left[ \dot{m}_{cmb} \times \left( \tau_{VO2_{cmb}} \times \left( M_{scv} - M_{cmb} \right) + \left( \tau_{VO2_{cmb}} + \tau_{VO2_{scv}} - \tau_{VO2_{ech}} \right) \times M_{cmb} - \tau_{VO2_{ech}} \times M_{scv} \right) \right]$$

$$+ \dot{m}_{cmb}{}^2 \times \left[ M_{scv} \times \left( \tau_{VO2_{cmb}} - \tau_{VO2_{ech}} \right) \right] = 0$$

Où:

$\dot{m}_{scv}$ est un débit massique de gaz balayés,

$M_{cmb}$ est une masse molaire des gaz issus de la combustion,

$\tau_{VO2_{scv}}$ est une concentration volumique d'oxygène dans les gaz balayés,

$\tau_{VO2_{ech}}$ est une concentration volumique maximale admissible d'oxygène dans les gaz d'échappement,

$\tau_{VO2_{cmb}}$ est une concentration volumique d'oxygène dans les gaz issus de la combustion,

$M_{scv}$ est une masse molaire des gaz balayés,

$\dot{m}_{cmb}$ est un débit massique des gaz issus de la combustion

7. Dispositif selon la revendication précédente, **caractérisé en ce que** la valeur de la masse molaire des gaz balayés ($M_{scv}$) est choisie égale à la masse molaire de l'air.

8. Dispositif selon l'une quelconque des revendications précédentes, **caractérisé en ce qu'**il comprend un module d'actionnement des soupapes (40) et **en ce que** le dispositif applique aux soupapes des déphasages d'ouverture et/ou de fermeture de manière à ce que la consigne de balayage maximale admissible ($\dot{m}_{scv\_max}$) soit mise en oeuvre dans le moteur.

**Patentansprüche**

1. Vorrichtung zum Steuern des Öffnens und Schließens von Ansaug- und Auslassventilen in einer Kraftfahrzeug-Brennkraftmaschine, **dadurch gekennzeichnet, dass** sie ein Modul (10) umfasst, das konfiguriert ist, um eine maximale zulässige Sauerstoff-Volumenkonzentration ($\tau_{VO2ech}$) am Eingang eines Auspufftopfkatalysators zu bestimmen, ein Modul (20) das konfiguriert ist, um eine Sauerstoffvolumenkonzentration in Gasen zu bestimmen, die aus einer Verbrennung in der Maschine hervorgehen ($\tau_{VO2cmb\_estim}$), ein Modul (30), das konfiguriert ist, um einen maximalen zulässigen Luftspülmengendurchfluss ($\dot{m}_{scv\_max}$) in Abhängigkeit von der maximalen zulässigen Sauerstoffvolumenkonzentration in Abgasen ($\tau_{VO2ech}$) und der Sauerstoffvolumenkonzentration in Gasen, die aus der Verbrennung ($\tau_{VO2cmb\_estim}$) hervorgehen, zu bestimmen, und ein Modul (40), das konfiguriert ist, um eine Steuerung des Öffnens und Schließens der Ansaug- und Auslassventile der Maschine in Abhängigkeit von dem derart bestimmten maximalen zulässigen Luftspülsollwert umzusetzen.

2. Vorrichtung nach dem vorhergehenden Anspruch, **dadurch gekennzeichnet, dass** sie konfiguriert ist, um die maximale zulässige Sauerstoff-Volumenkonzentration ($\tau_{VO2ech}$) am Eingang des Auspufftopfkatalysators ($T_{cata}$) unter Berücksichtigung eines Verbrennungsgemisch-Reichhaltigkeitssollwerts ($\phi_{sp}$) in der Maschine zu bestimmen (10).

3. Vorrichtung nach einem der vorhergehenden Ansprüche, **dadurch gekennzeichnet, dass** das Modul (20), das konfiguriert ist, um eine Sauerstoff-Volumenkonzentration in den Gasen, die aus der Verbrennung ($\tau_{VO2cmb\_estim}$) hervorgehen, zu bestimmen, diese Bestimmung ausführt, indem es eine Kartographie verwendet, die eine Sauerstoffvolumenkonzentration in Abhängigkeit von einem Drehzahlwert der Maschine und einem Luftfüllwert der Maschine gewichtet durch eine Tabelle, von der ein Eintrag ein Verbrennungsreichhaltigkeitsollwerts ($\phi_{sp}$) ist, gibt.

4. Vorrichtung nach einem der vorhergehenden Ansprüche, **dadurch gekennzeichnet, dass** das Modul (30), das konfiguriert ist, um den zulässigen maximalen Luftspülmengendurchfluss ($\dot{m}_{scv\_max}$) zu bestimmen, eine Funktion zweiten Grades löst, die als Unbekannte einen maximalen zulässigen Luftspülmengendurchfluss ($\dot{m}_{scv\_max}$) hat.

5. Vorrichtung nach dem vorhergehenden Anspruch, **dadurch gekennzeichnet, dass** das Modul (30), das konfiguriert ist, um den maximalen zulässigen Luftspülmengendurchfluss ($\dot{m}_{scv\_max}$) zu bestimmen, die Koeffizienten der Funktion des zweiten Grads ausgehend von Werten der molaren Masse, die aus der Verbrennung ($M_{cmb}$) hervorgehen, einer Sauerstoffvolumenkonzentration in den Gasen, die aus der Verbrennung ($\tau_{VO2cmb}$) hervorgehen, und einer

maximalen Sauerstoffvolumenkonzentration von Abgasen ($\tau_{VO2_{ech}}$) identifiziert.

6. Vorrichtung nach dem vorhergehenden Anspruch, **dadurch gekennzeichnet, dass** die Funktion zweiten Grads die folgende Form hat:

$$\dot{m}_{scv}{}^2 \times \left[ M_{cmb} \times \left( \tau_{VO2_{scv}} - \tau_{VO2_{ech}} \right) \right]$$
$$+ \dot{m}_{scv} \times \left[ \dot{m}_{cmb} \times \left( \tau_{VO2_{cmb}} \times \left( M_{scv} - M_{cmb} \right) + \left( \tau_{VO2_{cmb}} + \tau_{VO2_{scv}} - \tau_{VO2_{ech}} \right) \times M_{cmb} - \tau_{VO2_{ech}} \times M_{scv} \right) \right]$$
$$+ \dot{m}_{cmb}{}^2 \times \left[ M_{scv} \times \left( \tau_{VO2_{cmb}} - \tau_{VO2_{ech}} \right) \right] = 0$$

wobei:

$\dot{m}_{scv}$ ein Mengendurchfluss gespülter Gase ist,
$M_{cmb}$ eine molare Masse der Gase, die aus der Verbrennung hervorgehen, ist,
$\tau_{VO2scv}$ eine Sauerstoffvolumenkonzentration in den gespülten Gasen ist,
$\tau_{VO2_{ech}}$ eine maximale zulässige Sauerstoffvolumenkonzentration in den Abgasen ist,
$\tau_{VO2_{cmb}}$ eine Sauerstoffvolumenkonzentration in den Gasen,
die aus der Verbrennung hervorgehen, ist,
$M_{scv}$ eine molare Masse der gespülten Gase ist,
$\dot{m}_{cmb}$ ein Mengendurchfluss der Gase, die aus der Verbrennung hervorgehen, ist.

7. Vorrichtung nach dem vorhergehenden Anspruch, **dadurch gekennzeichnet, dass** der Wert der molaren Masse der gespülten Gase ($M_{scv}$) gleich der molaren Masse der Luft ausgewählt ist.

8. Vorrichtung nach einem der vorhergehenden Ansprüche, **dadurch gekennzeichnet, dass** sie ein Modul zum Betätigen der Ventile (40) umfasst, und dass die Vorrichtung an die Ventile Öffnungs- und/oder Schließphasenverschiebungen derart anwendet, dass der maximale zulässige Spülsollwert ($\dot{m}_{scv\_max}$) in der Maschine umgesetzt wird.

## Claims

1. A device for controlling the opening and closing of inlet and exhaust valves of a motor vehicle combustion engine, **characterized in that** it includes a module (10) configured to determine a maximum admissible volume concentration of oxygen ($\tau_{VO2ech}$) at the inlet of an exhaust box catalyst, a module (20) configured to determine a volume concentration of oxygen in the gases issued from a combustion in the engine ($\tau_{VO2cmb\_estim}$), a module (30) configured to determine a maximum admissible mass flow of air scavenging ($m_{scv\_max}$) as a function of the maximum admissible volume concentration of oxygen in the exhaust gases ($\tau_{VO2ech}$) and of the volume concentration of oxygen in gases issued from the combustion ($\tau_{VO2cmb\_estim}$) and a module (40) configured to implement a control of the opening and closing of the inlet and exhaust valves of the engine as a function of the maximum admissible air scavenging setpoint thus determined.

2. The device according to the preceding claim, **characterized in that** it is configured to determine (10) the maximum admissible volume concentration of oxygen ($\tau_{VO2ech}$) at the inlet of the exhaust box catalyst, taking into account a temperature of the catalyst ($T_{cata}$) and taking into account a richness setpoint ($\Phi_{sp}$) of combustion mixture in the engine.

3. The device according to any one of the preceding claims, **characterized in that** the module (20) configured to determine a volume concentration of oxygen in the gases issued from the combustion ($\tau_{VO2cmb\_estim}$) carries out this determination by using a mapping giving a volume concentration of oxygen as a function of an engine speed value and of an air-filling value of the engine weighted by a table, an entry of which is a combustion richness setpoint value ($\Phi_{sp}$).

4. The device according to any one of the preceding claims, **characterized in that** the module (30) configured to determine the maximum admissible mass flow of air scavenging ($m_{scv\_max}$) solves an equation of the second degree having as unknown a maximum admissible mass flow value of air scavenging ($m_{scv\_max}$).

5. The device according to the preceding claim, **characterized in that** the module (30) configured to determine the maximum admissible mass flow of air scavenging ($m_{scv\_max}$) identifies coefficients of said equation of the second degree from molar mass values of gasissued from the combustion ($m_{cmb}$), of a volume concentration of oxygen in the gases issued from the combustion ($\tau_{VO2cmb}$) and of a maximum volume concentration of oxygen of exhaust gas ($\tau_{VO2ech}$).

6. The device according to the preceding claim, **characterized in that** the equation of the second degree is of the form:

$$m_{scv}{}^2 \ \text{x} \ [M_{cmb} \ \text{x} \ (\tau_{VO2scv} - \tau_{VO2ech})]$$
$$+m_{scv} \ \text{x} \ [m_{cmb} \ \text{x} \ (\tau_{VO2cmb} \ \text{x} \ (M_{scv} - M_{cmb}) + (\tau_{VO2cmb} + \tau_{VO2scv} - \tau_{VO2ech})\text{x}M_{cmb} - \tau_{VO2ech} \ \text{x} \ M_{scv})]$$
$$+m_{cmb}{}^2 \ \text{x} \ [M_{scv} \ \text{x} \ (\tau_{vo2cmb} - \tau_{VO2ech})] = 0$$

where:

$m_{scv}$ is a mass flow of scavenged gases,
$M_{cmb}$ is a molar mass of the gases issued from the combustion,
$\tau_{VO2scv}$ is a volume concentration of oxygen in the scavenged gases,
$\tau_{VO2ech}$ is a maximum admissible volume concentration of oxygen in the exhaust gases,
$\tau_{VO2cmb}$ is a volume concentration of oxygen in the gases issued from the combustion,
$M_{scv}$ is a molar mass of the scavenged gases,
$M_{cmb}$ is a mass flow of the gases issued from the combustion.

7. The device according to the preceding claim, **characterized in that** the value of the molar mass of the scavenged gases ($M_{scv}$) is selected to be equal to the molar mass of the air.

8. The device according to any one of the preceding claims, **characterized in that** it includes an actuation module of the valves (40) and **in that** the device applies to the valves opening and/or closure phase shifts so that the maximum admissible scavenging setpoint ($m_{scv\_max}$) is implemented in the engine.

FIG. 1

FIG. 2

**RÉFÉRENCES CITÉES DANS LA DESCRIPTION**

**Documents brevets cités dans la description**

- DE 102006031254 A1